Europäisches Patentamt

**European Patent Office**

Office européen des brevets

(11) Publication number: **0 013 161**
**A1**

(12) # EUROPEAN PATENT APPLICATION

(21) Application number: **79303011.5**

(22) Date of filing: **21.12.79**

(51) Int. Cl.³: **H 04 N 1/30**
**G 03 G 15/044**

(30) Priority: **29.12.78 GB 5032978**

(43) Date of publication of application:
**09.07.80 Bulletin 80/14**

(84) Designated Contracting States:
**DE FR GB**

(71) Applicant: **XEROX CORPORATION**
**Xerox Square - 020**
**Rochester New York 14644(US)**

(72) Inventor: **Brooke, Edric Raymond**
**13 The Stewarts**
**Bishops Stortford Hertfordshire(GB)**

(72) Inventor: **Vinter, Nicholas Gilbert**
**11, Leyfields New Road**
**Rayne Braintree Essex(GB)**

(72) Inventor: **Duncan, Malcolm Alistair**
**Keeper's Cottage 20 Bridge Street**
**Whaddon Nr Royston Herts.(GB)**

(74) Representative: **Goode, Ian Roy et al,**
**European Patent Attorney c/o Rank Xerox Limited,**
**Patent Dept. Westbourne House 14-16 Westbourne**
**Grove**
**London W2 5RH(GB)**

(54) **Apparatus for reproducing graphic information.**

(57) In a CCD scanning arrangement, first and second CCD arrays (10, 11) are used to look at spaced apart reading lines, the sensor elements of the two arrays being staggered longitudinally relative to one another by half a pitch of the sensor elements. First and second stylus arrays (14, 15) spaced apart by the same distance as the reading lines are connected respectively (via appropriate electronics) to the sensor elements of the first and second CCD arrays (10, 11). Thus, in use, as the first and second reading lines in turn scan a document (2), the first and second stylus arrays (14, 15) create a copy. The second line fills in the gaps between the styli of the first writing line, thereby doubling the lines per cm across the copy.

0013161

# APPARATUS FOR REPRODUCING GRAPHIC INFORMATION

This invention relates to an apparatus for reproducing graphic information, and is particularly concerned with an apparatus comprising optical means for forming in an image plane an image of a line of an original, scanning means for causing relative scanning motion between the original and the image plane in a direction transversely of the line, a linear array of photosensitive elements in the image plane arranged to receive the succession of line images, and marking means comprising a linear array of marking elements for marking a copy material in response to the outputs of the photosenstive elements.

The marking elements are typically an array of electrographic styli, and may generate a reproduction of the original either in the same location as the original, or at a remote location after transmission of the electrical signals by facsimile transmission techniques.

In an apparatus of this kind, an original, usually a document, is scanned by focussing an image of a line of the original information onto an array of photosensitive detectors, and either moving the document past a fixed optical system, or moving elements in the optical system, so that the detector array 'sees' a flowing succession of linear portions of the original document, the linear portions extending transversely of the scanning direction. The electrical outputs of the individual detectors may in the simplest case be individually amplified and passed directly to corresponding individual marking styli, eg, electrographic styli. Alternatively, the electrical output signals of the detectors may be arranged in serial fashion for transmission to a remote location. The set of styli, whether in the same location as the detectors, or at a remote location, are arranged to form an electrostatic

0013161

image on a copying material. The electrostatic image thus formed may then be developed, for example, by the same techniques as those used in xerography, to produce a visible copy of the original.

The number of styli used in such arrangements to produce reasonable resolution is typically at least 80 per cm. Thus, a 22 cm page width requires at least 1700 styli, for which a matrix addressing arrangement may be used to reduce the number of drivers required.

In order to increase resolution in the copy, it is of course possible to increase the number of marking elements (eg styli) so that there are more of them per cm. The difficulties of manufacturing an electrographic array with such small styli has led to the use of two arrays of styli that are spaced apart in the scanning direction and in which the individual styli of the two arrays are staggered with respect to one another. Such systems suffer from the disadvantage that an incoming succession of electrical signals needs to be treated in such a way that they energise appropriate ones of the styli. Various electronic means have been proposed for this purpose.

Another problem which arises is that of obtaining sufficient resolution of the image at the array of photosensitive detectors. Typically, arrays of charge coupled devices (CCDs) have been used to detect line images, and the use of staggered arrays has been suggested to improve resolution. This arrangement suffers from the disadvantage that the output of the arrays have to be combined, with suitable delays, to produce a single succession of signals for transmission.

The present invention is intended to remedy these disadvantages, and provides an apparatus for reproducing graphic information which is characterised in that there are provided means for forming simultaneously a plurality

0013161

of line images of lines of the original that are spaced
apart from one another in the scanning direction, and a
corresponding plurality of arrays of photosensitive
elements and arrays of marking elements spaced apart in
proportion to the spacing of the lines of the original, the
individual elements of respective ones of the arrays of
photosensitive elements being arranged to view elemental
portions of the spaced apart lines of the original that are
staggered in the direction of the arrays, and the
individual elements of the marking arrays being staggered
in correspondence therewith.

The apparatus of the invention has the advantage that it
provides improved resolution without the need for
electronics which combine or split the electrical signals
of previous arrangements.

An apparatus in accordance with the invention will now be
described, by way of example, with reference to the
accompanying drawing which is a diagrammatic representation
of a suitable arrangement.

A transparent platen 1 supports an original, which may be a
document 2.  Graphic information on the document 2 is
illuminated by means of lamp 3, and a mirror 4 is arranged
to move parallel with the platen to scan the document 2.
The lamp 3 is mounted for movement with the mirror 4.  The
mirror 4 receives light from a strip of the document 2
which extends transversely of the scanning direction, and
directs this light generally parallel with the platen 1
onto a mirror 5.  Mirror 5, together with a further mirror
6, form a roof-type arrangement, reversing the direction of
the light, and directing it through a lens 7.  The image
formed by lens 7 is divided into two parts by means of
mirrors 8 and 9, and the two parts of the image are focussed
respectively on CCD arrays 10 and 11.  During scanning by
the mirror 4, the lens 7, the mirrors 8 and 9, and the CCD
arrays 10 and 11 all move together in the opposite

- 4 -

direction to mirror 4 but at the same speed, so as to maintain a constant optical path length. In one alternative arrangement, the optics are maintained stationary, and a moving platen carries the document over a fixed first mirror. In another arrangement, full-and-half-rate scanning is used, mirrors 5 and 6 moving at half the rate of mirror 4, and the CCD arrays being fixed.

The arrangement described causes two transverse lines of information at spaced apart positions of the original to be focussed in image planes of the lens 7 above and below mirrors 8 and 9. The image planes are coincident with linear CCD arrays 10 and 11, and the scanning motion causes a flowing image to be formed on each of the CCD arrays.

The individual elements of the CCD arrays 10 and 11 are arranged so that the elemental portions of the original which each of them sees are staggered with respect to one another in the direction transversely of the scanning direction. In practice, this will means the CCD arrays being staggered longitudinally relative to one another by half a pitch of the detector elements.

CCD arrays 10 and 11 are connected, by way of appropriate electronic circuits 12 and 13 respectively to stylus arrays 14 and 15. The stylus arrays 14 and 15 are arranged to deposit electrostatic charges on a copy material 16, which may be a dielectric paper, and which is moved relative to the stylus arrays in correspondence with the scanning of the original. There is one individual stylus element for each individual detector element of the CCD arrays. The individual stylus elements of the two stylus arrays are staggered relative to one another in correspondence with the elemental portions of the original which are scanned by the individual detector elements. The stylus arrays 14 and 15 are spaced apart from one another in the scanning direction by the same distance as the two scanned lines of information on the original for a one-to-one copying ratio.

0013161

For reduction or magnification copying, this spacing and the other relevant parameters are in proportion.

In operation, as the original is scanned, transverse lines of information that are spaced apart from one another are focussed on the respective CCD arrays, and the two stylus arrays in turn form a latent image on the dielectric paper. The second writing line fills in the gaps between the styli of the first writing line, so that the overall effect is to write at twice the number of lines per cm across the width of the dielectric paper.

The two spaced apart lines of information may be spaced apart in the scanning direction by any suitable distance which is a multiple of the line separation, that is the separation of successive printed lines on the final copy, which will be of a similar order of size to the spacing of the elemental portions of the copy in the transverse direction. In order to completely cover a page, one read/write operation will start before the other, and the second, gap-filling operation will continue, at the end of a scanned page, after the first read/write operation is completed until the gaps in the remaining lines are filled.

The electrical signals between the detector elements and the stylus arrays are transmitted by two separate channels, so no delaying or combining electronics are needed. It is, however, also possible to use the apparatus of the present invention in conjunction with the previous arrangements for improving resolution, ie, by providing sets of staggered CCDs for each of two or more stylus arrays, or by providing two or more stylus arrays for each of two or more CCD arrays.

Although the embodiment of the invention described above relates to the use of two CCD arrays and two stylus arrays, it is of course possible to use three or more of each, with appropriate, corresponding, staggering patterns.

Furthermore, any suitable writing technique may be used instead of electrographic styli. For example, electrolytic or electrochromic writing techniques may be employed. In the case where electrographic styli are used, the electrostatic latent image may be formed on the surface of a reusable member such as the insulating surface of a drum, and the image developed on the drum and then transferred to paper.

The apparatus of the invention alleviates the difficult manufacturing problems of both CCD arrays and electrographic stylus arrays. High resolution images can be formed using existing technology without the need for complex electronic circuitry, thereby keeping the cost down. There is the further benefit that if one read/write channel should fail, the apparatus would continue to function (albeit at reduced resolution) on the remaining channel or channels.

0013161

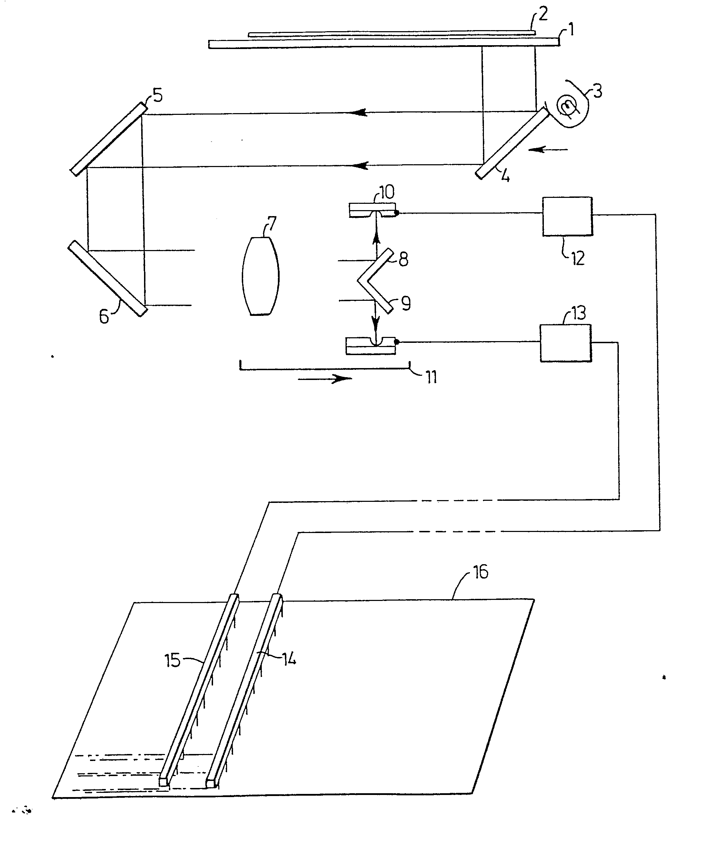

CLAIMS:

1. Apparatus for reproducing graphic information comprising optical means (3, 7) for forming in an image plane an image of a line of an original (2), scanning means (4, 5, 6) for causing relative scanning motion between the original and the image plane in a direction transversely of the line, a linear array of photosensitive elements (10 or 11) in the image plane arranged to receive the succession of line images, and marking means (14 or 15) comprising a linear array of marking elements for marking a copy material (16) in response to the outputs of the photosensitive elements (10 or 11) characterised in that there are provided means (8, 9) for forming simultaneously a plurality of line images of lines of the original that are spaced apart from one another in the scanning direction, and a corresponding plurality of arrays of photosensitive elements (10, 11) and arrays of marking elements (14, 15) spaced apart in proportion to the spacing of the lines of the original, the individual elements of respective ones of the arrays of photosensitive elements (10, 11) being arranged to view elemental portions of the spaced apart lines of the original that are staggered in the direction of the arrays, and the individual elements of the marking arrays (14, 15) being staggered in correspondence therewith.

2. The apparatus of Claim 1 wherein there are two arrays of photosensitive elements and two arrays of marking elements.

3. The apparatus of Claim 1 or Claim 2 wherein the arrays of photosensitive elements are arrays of charge coupled devices.

4. The apparatus of any one of Claims 1 to 3 wherein the marking elements are electrographic styli.

1/1

## DOCUMENTS CONSIDERED TO BE RELEVANT

| Category | Citation of document with indication, where appropriate, of relevant passages | Relevant to claim |
|---|---|---|
| | US - A - 3 980 817 (PENN) <br> * Column 3, lines 9-23 * | 1-3 |
| | US - A - 3 624 661 (SHEBANOW) <br> * Column 2, line 58 to column 3, line 29 * | 1,2,4 |
| | US - A - 2 897 264 (DEUTH) <br> * Column 4, lines 19-51 * | 1 |
| A | IBM TECHNICAL DISCLOSURE BULLETIN, vol. 15, no. 5, October 1972, New York, US <br> W. BACHTOLD. et al. "Facsimile equipment and document I/O device", pages 1558-1559. <br> * Page 1559 * | 1 |
| | US - A - 4 005 285 (PRICE) <br> * Column 1, lines 13-35; column 2, lines 24-31 * | 1,3 |
| A | US - A - 3 867 569 (WATSON) <br> * Column 4, line 39 to column 5, line 24 * | 1,3 |

**CLASSIFICATION OF THE APPLICATION (Int Cl )**

H 04 N 1/30
G 03 G 15/044

**TECHNICAL FIELDS SEARCHED (Int Cl. )**

H 04 N 1/00
G 03 G 15/00

**CATEGORY OF CITED DOCUMENTS**

X  particularly relevant
A: technological background
O  non-written disclosure
P  intermediate document
T  theory or principle underlying the invention
E: conflicting application
D. document cited in the application
L: citation for other reasons

&: member of the same patent family, corresponding document

| The present search report has been drawn up for all claims | | |
|---|---|---|
| Place of search <br> The Hague | Date of completion of the search <br> 01-04-1080 | Examiner <br> DE ROECK |

EPO Form 1503.1  06.78